# EUROPÄISCHE PATENTSCHRIFT

(11) **EP 0 670 427 B1**
(45) Veröffentlichungstag und Bekanntmachung des Hinweises auf die Patenterteilung: **31.03.1999**
(21) Anmeldenummer: 95101265.7
(22) Anmeldetag: 31.01.1995
(51) Int. Cl.: F15B 15/14

(54) **Fluidisch betätigbare Vorschubeinheit**
Fluid actuated transfer unit
Unité d'avance à fluide

(30) Priorität: 05.02.1994 DE 4403639
(43) Veröffentlichungstag der Anmeldung: 06.09.1995
(73) Patentinhaber: FESTO AG & Co, 73734 Esslingen (DE)
(72) Erfinder: Stoll, Kurt, Dr., D-73732 Esslingen (DE)
(74) Vertreter: Abel, Martin, Dipl.-Ing.

(56) Entgegenhaltungen:
- DE-A- 2 459 560
- DE-A- 2 519 251
- DE-U- 9 209 980
- GB-A- 2 136 506

## Beschreibung

Die Erfindung betrifft eine fluidisch betätigbare Vorschubeinheit, mit einem Gehäuse und mit einem in dem Gehäuse axial verschiebbar gelagerten Vorschubteil, das durch Zufuhr eines Antriebsfluides in einen von dem Vorschubteil begrenzten Arbeitsraum aus dem Gehäuse ausfahrbar ist, wobei das Vorschubteil zumindest entlang seines in dem Gehäuse geführten Längenabschnittes als dreiseitiger prismatischer Körper ausgebildet ist.

Aus der DE 35 37 124 A1 geht eine Vorschubeinheit hervor, bei der das Vorschubteil ein in einem Gehäuseraum verschiebbar geführter hohlzylindrischer Körper ist. Wird ein von dem Vorschubteil begrenzter Arbeitsraum mit Druckluft beaufschlagt, fährt das Vorschubteil aus und ermöglicht auf diese Weise die Verlagerung eines mit dem Vorschubteil verbundenen externen Gegenstandes. Um unter anderem eine Verdrehsicherung zu erzielen, ist dem Vorschubteil eine Kolbenstange parallelgeschaltet, mit der es über ein Verbindungsglied gekoppelt ist. Dies hat allerdings eine relativ große Baubreite der Vorschubeinheit zur Folge.

In der DE-A-25 19 251, die dem Oberbegriff des Anspruchs 1 entspricht, wurde daher bereits vorgeschlagen, die Verdrehsicherung dadurch zu bewirken, daß das von der Kolbenstange gebildete Vorschubteil als dreiseitiger prismatischer Körper ausgebildet ist, der in einer entsprechend ausgebildeten Durchtrittsöffnung des Gehäuses läuft. Um Überbestimmungen bei der Führung auszuschließen, bedarf es hier aber einer sehr exakten und dementsprechend fertigungstechnisch relativ aufwendigen Anpassung zwischen der Formgebung der Kolbenstange und der Durchtrittsöffnung.

Es ist die Aufgabe der vorliegenden Erfindung, eine Vorschubeinheit der eingangs genannten Art zu schaffen, die sich bei präziser Führung und gleichzeitiger Verdrehsicherung des Vorschubteils sowie bei kompakter Bauweise sehr kostengünstig verwirklichen läßt.

Diese Aufgabe wird dadurch gelöst, daß der prismatische Körper im Bereich seiner drei Seitenflächen im Gehäuse geführt ist, während die drei Übergangsbereiche zwischen jeweils benachbarten Seitenflächen ungeführt sind.

Auf diese Weise ergibt sich aufgrund der Formgebung des geführten Längenabschnittes des Vorschubteils eine äußerst belastbare Verdrehsicherung. Gleichzeitig läßt sich aufgrund der ebenen Seitenflächen des prismatischen Körpers eine präzise Führung gewährleisten. Da die Übergangsbereiche zwischen jeweils zwei benachbarten Seitenflächen, also die Bereiche der längsverlaufenden Seitenkanten des prismatischen Körpers, ungeführt sind, können Überbestimmungen bei der Führung ausgeschlossen werden. Zudem lassen sich die Führungsmaßnahmen sehr kostengünstig verwirklichen.

Vorteilhafte Weiterbildung der Erfindung sind in den Unteransprüchen aufgeführt.

Die Außenkontur des prismatischen Körpers ist an die Innenkontur des ihn aufnehmenden Gehäuseraumes zweckmäßigerweise so angepaßt, daß zwischen den im Bereich zweier benachbarter Seitenflächen angeordneten Übergangsbereichen und der diesen jeweils gegenüberliegenden Gehäusefläche ein Abstand vorliegt. Dies erleichtert die Justierung des Vorschubteils im Gehäuse beim Zusammenbau der Vorschubeinheit, da ein Überbestimmungen hervorrufender Kontakt zwischen den Übergangs bereichen und dem Gehäuse vermieden werden kann.

Es ist von Vorteil, wenn der prismatische Körper an den Übergangsbereichen abgerundet ist.

Die längsverschiebliche Führung des Vorschubteils wird vorzugsweise dadurch verwirklicht, daß einer jeweiligen der drei Seitenflächen des prismatischen Körpers ein Führungselement zugeordnet ist, das entweder am prismatischen Körper oder am Gehäuse festgelegt ist und mit einer gegenüberliegenden Fläche am jeweils anderen Teil zusammenarbeitet. Wird eines dieser Führungselemente zusätzlich beaufschlagt, stellt sich auf Grund der prismatischen Form ein großflächiger Führungskontakt an allen Führungselementen ein, so daß sich eine praktisch spielfreie und äußerst präzise Führung verwirklichen läßt. Als geeignetes Beaufschlagungsmittel kann z.B. eine Federanordnung und/oder ein fluidisches Druckmittel herangezogen werden.

Das Gehäuse der Vorschubeinheit verfügt zumindest im Bereich des das Vorschubteil führenden Längenabschnittes über eine rechteckige und dabei insbesondere quadratische äußere Querschnittskontur, wobei das prismatische Vorschubteil so ausgerichtet ist, daß eine seiner Seitenflächen parallel zu einer der Außenflächen dieses Gehäuseabschnittes verläuft. Auf diese Weise steht außen am Gehäuse eine relativ breite Zone zur Verfügung, die mit einer oder mehreren Längsführungen für Sensoren ausgestattet werden kann, die bei bestimmten Positionen des Vorschubteils ein Signal erzeugen.

Nachfolgend wird die Erfindung anhand der beiliegenden Zeichnung näher erläutert. In dieser zeigen:
- Fig. 1: eine erste Bauform der erfindungsgemäßen Vorschubeinheit im Längsschnitt gemäß Schnittlinie I-I aus Fig. 2, wobei strichpunktiert eine ein Stück weit ausgefahrene Stellung des Vorschubteils angedeutet ist,
- Fig. 2: einen Querschnitt durch die Vorschubeinheit gemäß Schnittlinie II-II aus Fig. 1 und
- Fig. 3: einen Querschnitt durch die Vorschubeinheit gemäß Schnittlinie III-III aus Fig. 1.

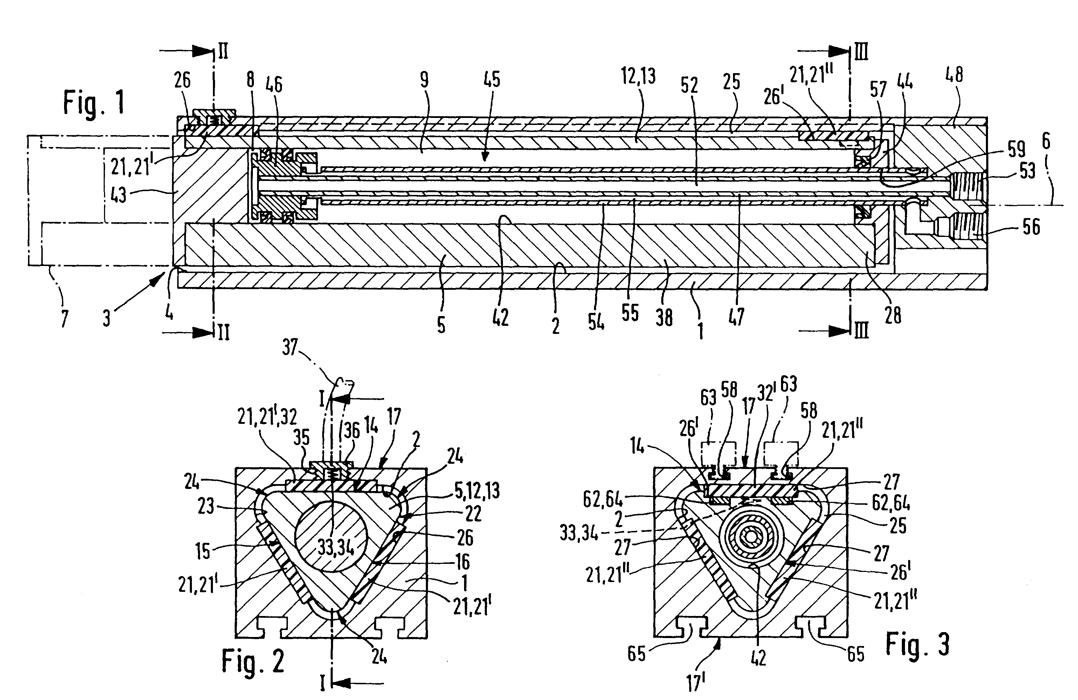

Die Vorschubeinheit des Ausführungsbeispiels hat ein langgestrecktes Gehäuse 1, das im Querschnitt gemäß Fig. 2 und 3 gesehen eine rechteckige und dabei vorzugsweise quadratische Außenkontur aufweist. Diese Rechteckkonturierung erstreckt sich zweckmäßigerweise über die gesamte Gehäuselänge.

Im Innern des Gehäuses 1 befindet sich ein Gehäuseraum 2, der an einer Gehäuse-Stirnseite 3 über eine Öffnung 4 offen ist.

In dem Gehäuseraum 2 ist ein längliches Vorschubteil 5 axial, das heißt in Richtung der Längsachse 6 des Gehäuses 1, verschiebbar gelagert. In Abhängigkeit von der momentanen Verschiebestellung ragt das Vorschubteil 5 dabei mehr oder weniger weit über die Öffnung 4 stirnseitig aus dem Gehäuse 1 heraus. In der Fig. 1 nimmt das Vorschubteil 5 eine maximal eingefahrene Stellung ein, in der es fast vollständig, das heißt zumindest annähernd über seine gesamte Länge in dem Gehäuseraum 2 aufgenommen ist. Des weiteren ist in Fig. 1 mit der Bezugsziffer 7 strichpunktiert eine der möglichen ausgefahrenen Stellungen angedeutet, in der das Vorschubteil 5 nach außen über das Gehäuse 1 vorsteht.

Sowohl die Ausfahrbewegung als auch die Einfahrbewegung des Vorschubteils 5 wird beim Ausführungsbeispiel über ein fluidisches Druckmittel wie Druckluft, nachfolgend als Antriebsfluid bezeichnet, hervorgerufen. Durch geeignete Zufuhr und/oder Abfuhr des Antriebsfluides bezüglich zweier Arbeitsräume 8, 9 wird das Vorschubteil 5 so druckbeaufschlagt, daß es die betreffende Verschiebebewegung ausführt.

Das Vorschubteil 5 ist zumindest entlang seines im Gehäuse 1 geführten Längenabschnittes, beim Ausführungsbeispiel über seine gesamte Länge, als dreiseitiger prismatischer Körper 13 ausgebildet. Wie aus Fig. 2 und 3 ersichtlich, handelt es sich zweckmäßigerweise um einen regelmäßigen prismatischen Körper 13, dessen Grundfläche nach Art eines gleichseitigen Dreieckes konturiert ist, so daß die drei den prismatischen Körper 13 umfangsseitig begrenzenden Seitenflächen 14, 15, 16 in Umfangsrichtung des Vorschubteils 5 die gleichen Abmessungen haben.

Die Ausrichtung des prismatischen Körpers 13 mit Bezug zum Gehäuse 1 ist vorzugsweise so getroffen, daß eine (14) der Seitenflächen parallel zu einer (17) der vier umfangsseitigen Außenflächen des Gehäuses 1 verläuft.

Der jeweils innerhalb des Gehäuseraumes 2 verbleibende Längenabschnitt des Vorschubteils 5 ist in dem Gehäuseraum 2 seitlich quer abgestützt und dadurch längsverschieblich geführt. Die Führung erfolgt mittels mehrerer Führungselemente 21, die in dem Bereich zwischen der Mantelfläche bzw. prismatischen Fläche 22 des prismatischen Körpers 13 und der den Gehäuseraum 2 umfangsseitig begrenzenden Gehäusefläche 23 des Gehäuses 1 angeordnet sind. Die Anordnung ist dabei vorzugsweise so getroffen, daß die Führungselemente 21 nur mit den drei Seitenflächen 14, 15, 16 des prismatischen Körpers 13 zusammenarbeiten, nicht jedoch mit den drei übergangsbereichen 24, die sich jeweils zwischen zwei aneinander angrenzenden Seitenflächen 14, 15; 15, 16; 16, 14 befinden. Die Übergangsbereiche 24 entsprechen praktisch den Bereichen der längs verlaufenden Seitenkanten des prismatischen Körpers 13, die beim Ausführungsbeispiel allerdings abgerundet sind. An jede Seitenfläche 14, 15, 16 schließt sich daher längsseits ein gekrümmter bzw. abgerundeter ungeführter Übergangsbereich 24 an.

Der Gehäuseraum 2 des Ausführungsbeispiels weist eine dreieckige Prismengestalt auf. Die Querschnittskonturierung kann derjenigen des prismatischen Körpers 13 entsprechen. Zweckmäßig ist es jedoch, den Gehäuseraum 2 mit einem etwas größeren Querschnitt zu versehen, wobei allerdings eine im mathematischen Sinne ähnliche Konturierung beibehalten wird. Auf diese Weise ergibt sich zwischen der prismatischen Fläche 22 und der dem Gehäuseraum 2 begrenzenden prismatischen Gehäusefläche 23 ein umlaufender Ringspalt 25, der jedoch von den das Vorschubteil 5 bezüglich des Gehäuses 1 seitlich abstützenden Führungselementen 21 lokal überbrückt wird.

Die Führungselemente 21, die beim Ausführungsbeispiel eine plattenartige Gestalt haben, sind zweckmäßigerweise in zwei Dreiergruppen entlang des Umfanges des Längenabschnittes 12 gruppiert. Die erste Dreiergruppe, bestehend aus drei ersten Führungselementen 21, 21', ist am Gehäuse 1 festgelegt und befindet sich im Gehäuseraum 2 im Bereich der Öffnung 4. Jedes derartige erste Führungselement 21, 21' steht in Berührkontakt mit der jeweils zugewandten ebenen Seitenfläche 14; 15; 16 und beaufschlagt diese derart, daß zwar eine Querabstützung des prismatischen Körpers 13 erfolgt, gleichwohl eine axiale Verschiebebewegung aber noch möglich ist. Die ersten Führungselemente 21, 21' sitzen hierbei zweckmäßigerweise mit einem Teil ihrer Dicke in gehäuseseitigen Aufnahmetaschen 26 ein, die in die drei die Prismenkontur bildenden Abschnitte der Gehäusefläche 23 eingelassen sind. Auf diese Weise ergibt sich eine zuverlässige Fixierung.

Die vorstehend erwähnten drei Abschnitte der Gehäusefläche 23 bilden beim Ausführungsbeispiel auch drei Führungsflächen 27, die mit den in Fig. 3 gezeigten drei zweiten Führungselementen 21'' der zweiten Dreiergruppe von Führungselementen 21 zusammenarbeiten. Diese zweiten Führungselemente 21, 21'' sind vorschubteilfest angeordnet und gleiten bei einer Verschiebebewegung des Vorschubteils 5 an den Führungsflächen 27 entlang. Damit die entsprechende Führung während des gesamten maximalen Verschiebeweges des Vorschubteils 5 wirksam ist, sind die zweiten Führungselemente 21'' an dem ständig innerhalb des Gehäuseraumes 2 befindlichen inneren stirnseitigen Endbereich 28 des prismatischen Körpers 13 festgelegt. Ihre Gestalt entspricht zweckmäßigerweise derjenigen der ersten Führungselemente 21', und sie sind vergleichbar mit diesen in Aufnahmetaschen 26' fixiert, die in die drei Seitenflächen 14, 15, 16 des prismatischen Körpers 13 eingelassen sind.

Da die Führungsflächen 27 wie auch die Seitenflächen 14, 15, 16 eben ausgebildet sind, können die mit diesen Flächen zusammenarbeitenden Gleitflächen der Führungselemente 21 ebenfalls ebenflächig ausgebildet werden, was eine besonders einfache und kostengünstige Herstellung ermöglicht.

Um eine problemlose Einpassung der Führungselemente 21 mit Bezug zum Gehäuse 1 und zum Vorschubteil 5 zu ermöglichen, ist beim Ausführungsbeispiel eine vorteilhafte Maßnahme zum Spielausgleich vorgesehen. Hierbei ist jeweils einem Führungselement 32, 32' der beiden Dreiergruppen von ersten und zweiten Führungselementen 21, 21', 21'' ein Beaufschlagungsmittel 33 zugeordnet, welches das betreffende Führungselement 32, 32' quer zur Verschieberichtung des Vorschubteils 5 beaufschlagt und gegen die zugewandte Seitenfläche 14 bzw. Führungsfläche 27 vorspannt. Beim Ausführungsbeispiel ist das Beaufschlagungsmittel 33 jeweils von einer Federanordnung 34 gebildet, die sich zwischen dem Führungselement 32, 32' und dem dieses jeweils tragenden Bauteil 1, 5 abstützt. Dabei ist das betreffende Führungselement 32, 32' in der zugeordneten Aufnahmetasche 26, 26' querbeweglich gelagert, damit es die erforderliche Ausgleichsbewegung ungehindert vollziehen kann.

Aus Fig. 1 und 2 geht eine Möglichkeit der Anordnung eines Beaufschlagungsmittels 33 hervor. Demnach verfügt das Gehäuse 1 über eine Querbohrung 35, die im Bereich der Rückseite des zugeordneten Führungselements 32 in die dieses aufnehmende Aufnahmetasche 26 einmündet. Außen ist die Querbohrung 35 durch eine am Gehäuse 1 verankerte Abdeckkappe 36 verschlossen, die beispielsweise in ein Innengewinde der Querbohrung 35 eingeschraubt sein kann. In dem zwischen der Abdeckkappe 36 und dem Führungselement 32 verbleibenden Raum ist eine von einer Druckfeder gebildete Federanordnung 34 aufgenommen, die sich an der Abdeckkappe 36 abstützt, gegen die Rückseite des Führungselements 32 arbeitet und letzteres gegen die zugewandte Seitenfläche 14 drückt.

Eine entsprechende Anordnung kann auch im Falle des am Vorschubteil 5 angeordneten Führungselementes 32' vorgesehen sein. In Fig. 3 ist die vorhandene Federanordnung 34 strichpunktiert angedeutet.

Bevorzugt handelt es sich bei dem beaufschlagten Führungselement 32, 32' jeweils um dasjenige, das im Bereich derjenigen Seitenfläche 14 angeordnet ist, die zu einer der Außenflächen 17 des Gehäuses 1 parallel verläuft.

Es können Maßnahmen getroffen sein, um die Druckkraft des Beaufschlagungsmittels 33 veränderlich einstellen zu können. Beim Ausführungsbeispiel wird die Druckkraft durch die jeweils gewählte Einschraubtiefe der Abdeckkappe 36 vorgegeben.

Anstelle einer mechanischen Vorspannung wäre auch eine fluidische Vorspannung denkbar. In Fig. 2 ist eine strichpunktierte Druckmittelleitung 37 angedeutet, die an die Querbohrung 35 angeschlossen werden kann, um die Rückseite des Führungselements 32 mit unter Druck stehendem Fluid zu beaufschlagen. Die Einstellung des Druckes geschieht zweckmäßigerweise über ein Druckregelventil bzw. einen Druckminderer.

Durch die Beaufschlagung des jeweils einen Führungselementes 32, 32' wird das dreieckig prismatische Vorschubteil 5 derart quer beaufschlagt, daß im Bereich der beiden anderen unbeaufschlagten Führungselemente ein optimaler Kontakt zwischen diesen und der zugeordneten Seitenfläche 15, 16 bzw. Führungsfläche 27 zustandekommt.

Das prismatische Vorschubteil 5 umfaßt beim Ausführungsbeispiel einen die erläuterte prismatische Außengestalt aufweisenden Rohrkörper 38 mit koaxialer durchgehender zylindrischer Bohrung 42, die durch beidseits stirnseitig an den Rohrkörper 38 angesetzte Abschlußdeckel 43, 44 verschlossen ist. Somit verfügt das Vorschubteil 5 im Innern über einen abgeschlossenen Innenraum 45. In dem Innenraum 45 ist ein dichtend mit der zylindrischen Begrenzungsfläche des Innenraumes 45 zusammenarbeitender Kolben 46 vorgesehen, der den Innenraum 45 in die eingangs bereits erwähnten ersten und zweiten Arbeitsräume 8, 9 unterteilt. Der Kolben 46 ist über eine Stange 47 am Gehäuse 1 befestigt. Er sitzt am einen Endbereich dieser Stange 47, die mit ihrem anderen Endbereich an einer der öffnung 4 entgegengesetzten stirnseitigen Gehäusewand 48 des Gehäuses 1 festgelegt ist und sich ausgehend von dort durch den zugewandten Abschlußdeckel 44 hindurch koaxial in den Innenraum 45 hineinerstreckt. Die Stange 47 ist in Längsrichtung von einem Druckmittelkanal 52 durchzogen, der am stirnseitigen Gehäusedeckel 48 mit einer Anschlußöffnung 53 kommuniziert und andernends zu dem der vorderen Gehäuse-Stirnseite 3 zugewandten ersten Arbeitsraum 8 ausmündet. Wird über die Anschlußöffnung 53 Arbeitsfluid zugeführt, vergrößert sich das Volumen des ersten Arbeitsraumes 8, und das Vorschubteil 5 fährt aus dem Gehäuse 1 aus, bis der innere Abschlußdeckel 44 auf den Kolben 46 aufläuft. Dann liegt die maximal ausgefahrene Stellung des Vorschubteils 5 vor.

Der Rückhub wird beim Ausführungsbeispiel ebenfalls durch das Arbeitsfluid hervorgerufen. Ein die Stange 47 mit radialem Spiel koaxial umschließendes Rohr 54 ist einenends an dem besagten stirnseitigen Gehäusedeckel 48 festgelegt und ragt in den Gehäuseraum 2 hinein, wobei es zugleich den zugewandten Abschlußdeckel 44 durchsetzt und im Innern des darauffolgenden zweiten Arbeitsraumes 9 im Bereich des Kolbens 46 endet. Auf diese Weise ergibt sich zwischen der Stange 47 und dem Rohr 54 ein Ringkanal 55, der im stirnseitigen Gehäusedeckel 48 mit einer weiteren Anschlußöffnung 56 kommuniziert und am anderen Endbereich des Rohres 54 zum zweiten Arbeitsraum 9 ausmündet. Um das Vorschubteil 5 einzufahren, wird über die weitere Anschlußöffnung 56 Arbeitsfluid in den zweiten Arbeitsraum 9 eingespeist, welches den inneren Abschlußdeckel 54 beaufschlagt. Wird in einen Arbeitsraum 8, 9 Arbeitsfluid eingespeist, wird der jeweils andere Arbeitsraum zweckmäßigerweise gleichzeitig entlüftet.

Damit über die von der Stange 47 und von dem Rohr 54 durchsetzte Durchbrechung 59 des inneren Abschlußdeckels 44 kein Druckmittel entweicht, ist an besagtem Abschlußdeckel 44 zweckmäßigerweise ein Dichtring 57 festgelegt, der an der Außenfläche des Rohres 54 anliegt und dieser entlanggleiten kann.

Die beispielsgemäße Vorschubeinheit ist ergänzend mit Mitteln versehen, die eine gewisse Abfrage der Verschiebeposition des Vorschubteils 5 ermöglichen. Außen am Gehäuse 1 sind mehrere Längsführungen 58 vorgesehen, an denen sich strichpunktiert angedeutete Sensoren 63 festlegen lassen, die berührungslos von einer am Vorschubteil 5 festgelegten Magnetanordnung 62 betätigbar sind. Für die Anordnung der Längsführungen 58 hat sich dabei besonders die Außenfläche 17 als vorteilhaft erwiesen, die unmittelbar neben und parallel zu der einen Seitenfläche 14 des prismatischen Körpers 13 verläuft. Das Vorschubteil 5 erstreckt sich hier über eine relativ große Breite in unmittelbarer Nähe der Außenfläche 17, so daß sich mehrere Längsführungen 58 problemlos nebeneinander und zugleich mit konstantem geringem Abstand zum Vorschubteil 5 anordnen lassen. Beim Ausführungsbeispiel sind zwei parallel zueinander verlaufende Längsführungen 58 vorgesehen, die als in die Außenfläche 17 eingelassene Verankerungsnuten für Sensoren 63 ausgebildet sind. Jeder Längsführung 58 ist ein an der zugewandten Seitenfläche 14 befestigtes dauermagnetisches Magnetteil 64 zugeordnet, wobei die Magnetteile 64 vorzugsweise zumindest teilweise in die betreffende Seitenfläche 14 eingelassen sind. Beim Ausführungsbeispiel befinden sie sich am inneren Endbereich 28 des Vorschubteils 5 im Bereich der dort vorgesehenen zweiten Führungselemente 21, 21'', wobei sie in Vertiefungen der Aufnahmetasche 26' des zugeordneten zweiten Führungselementes 21, 21'', 32' einsitzen und von dem vorgenannten Führungselement 21, 21'', 32' abgedeckt werden. Die Anordnung der Magnetanordnung 62 bzw. der Magnetteile 64 an dem Endbreich 28 hat den Vorteil, daß über den gesamten Hubbereich des Vorschubteils 5 eine Detektionsmöglichkeit besteht, da sich auch die Längsführungen 58 über die gesamte Länge des Gehäuseraumes 2 erstrecken.

Von Vorteil ist ferner, daß sich die Magnetanordnung 62 nur über einen Teil des Umfanges des prismatischen Körpers 13 erstrecken muß, da eine Verdrehsicherung gegeben ist, die eine stets korrekte Lage der Magnetanordnung 62 in bezug zu den Längsführungen 58 bewirkt.

Anstelle mehrerer Magnetteile 64 kann auch ein einziges Magnetteil gleichzeitig mehreren Längsführungen 58 zugeordnet sein.

An der der oberen Außenfläche 17 entgegengesetzten unteren Außenfläche 17' des Gehäuses 1 sind zweckmäßigerweise mehrere längs verlaufende Befestigungsnuten 65 vorgesehen, die zur Befestigung der Vorschubeinheit an einem anderen Gegenstand verwendet werden können.

Die erfindungsgemäße Vorschubeinheit zeichnet sich durch einen kompakten, schmalen Aufbau mit reduzierter Teileanzahl aus. Durch die Dreikantausbildung des Vorschubteils sind zur Verschiebeführung lediglich drei über den Umfang verteilt angeordnete Flächenführungen notwendig, von denen zwei starr ausgebildet sein können, während die dritte querbeweglich ist und durch die insbesondere federnde Beaufschlagung eine Selbstzentrierung und eine selbsttätige Nachstellung im Falle der Abnutzung bewirkt.

## Patentansprüche

1. Fluidisch betätigbare Vorschubeinheit, mit einem Gehäuse (1) und mit einem in dem Gehäuse (1) axial verschiebbar gelagerten Vorschubteil (5), das durch Zufuhr eines Antriebsfluides in einen von dem Vorschubteil (5) begrenzten Arbeitsraum (8) aus dem Gehäuse (1) ausfahrbar ist, wobei das Vorschubteil (5) zumindest entlang seines in dem Gehäuse (1) geführten Längenabschnittes (12) als dreiseitiger prismatischer Körper (13) ausgebildet ist, dadurch gekennzeichnet, daß der prismatische Körper (13) im Bereich seiner drei Seitenflächen (14, 15, 16) im Gehäuse (1) geführt ist, während die drei übergangsbereiche (24) zwischen jeweils zwei benachbarten Seitenflächen (14, 15; 15, 16; 16, 14) ungeführt sind.

2. Vorschubeinheit nach Anspruch 1, dadurch gekennzeichnet, daß der prismatische Körper (13) als regelmäßiger prismatischer Körper ausgebildet ist.

3. Vorschubeinheit nach Anspruch 1 oder 2, dadurch gekennzeichnet, daß die drei Übergangsbereiche (24) innerhalb des Gehäuses (1) mit Abstand zur zugewandten Gehäusefläche (23) angeordnet sind.

4. Vorschubeinheit nach einem der Ansprüche 1 bis 3, dadurch gekennzeichnet, daß der prismatische Körper (13) an den Übergangsbereichen (24) abgerundet ist, wobei die eine Krümmung aufweisenden Abschnitte ungeführt sind.

5. Vorschubeinheit nach einem der Ansprüche 1 bis 4, dadurch gekennzeichnet, daß an dem Gehäuse (1) drei über die prismatische Fläche (22) des prismatischen Körpers (13) verteilt angeordnete erste Führungselemente (21, 21') vorgesehen sind, die jeweils einer der drei Seitenflächen (14, 15, 16) des prismatischen Körpers (13) gegenüberliegen und zur Führung an dieser Seitenfläche anliegen.

6. Vorschubeinheit nach Anspruch 5, dadurch gekennzeichnet, daß die ersten Führungselemente (21, 21') innerhalb des den geführten Längenabschnitt (12) des Vorschubteils (5) aufnehmenden Gehäuseraumes (2) des Gehäuses (1) im Bereich der den Durchtritt des Vorschubteils (5) ermöglichenden Öffnung (4) angeordnet sind.

7. Vorschubeinheit nach einem der Ansprüche 1 bis 6, dadurch gekennzeichnet, daß an dem prismatischen Körper (13) drei über seine prismatische Fläche (22) verteilt axial mitbewegbar angeordnete zweite Führungselemente (21, 21'') vorgesehen sind, die jeweils einer gehäuseseitigen Führungsfläche (27) gegenüberliegen und zur Führung an dieser Führungsfläche anliegen.

8. Vorschubeinheit nach Anspruch 7, dadurch gekennzeichnet, daß die zweiten Führungselemente (21, 21'') an dem ständig innerhalb des Gehäuses (1) befindlichen Endbereich (28) des Vorschubteils (5) angeordnet sind.

9. Vorschubeinheit nach einem der Ansprüche 5 bis 8, dadurch gekennzeichnet, daß einem Führungselement (32, 32') der vorhandenen ersten und/oder zweiten Führungselemente (21, 21', 21'') mindestens ein Beaufschlagungsmittel (33) zugeordnet ist, welches das betreffende Führungselement (32, 32') mit insbesondere einstellbarer Druckkraft gegen die zugewandte Seitenfläche (14, 15, 16) bzw. Führungsfläche (27) drückt.

10. Vorschubeinheit nach Anspruch 9, dadurch gekennzeichnet, daß das Beaufschlagungsmittel (33) eine Federanordnung (34) umfaßt.

11. Vorschubeinheit nach Anspruch 9 oder 10, dadurch gekennzeichnet, daß das Beaufschlagungsmittel (33) von einem fluidischen Druckmittel gebildet ist, dessen Druck vorzugsweise variabel einstellbar ist, beispielsweise über ein Druckregelventil.

12. Vorschubeinrichtung nach einem der Ansprüche 5 bis 11, dadurch gekennzeichnet, daß die Führungselemente (21, 21', 21'') plattenförmig ausgebildet sind.

13. Vorschubeinrichtung nach einem der Ansprüche 1 bis 12, dadurch gekennzeichnet, daß der geführte Längenabschnitt (12) des Vorschubteils (5) in einem stirnseitig eine den Durchtritt des Vorschubteils (5) ermöglichende Öffnung (4) aufweisenden Gehäuseraum (2) angeordnet ist, wobei an der der Öffnung (4) axial entgegengesetzten stirnseitigen Gehäusewand (48) eine in den Gehäuseraum (2) hineinragende Stange (47) festgelegt ist, die zugleich in einen in dem Vorschubteil (5) angeordneten Innenraum (45) hineinragt und dort einen den Innenraum (45) in den Arbeitsraum (8) und einen weiteren Raum (9) unterteilenden Kolben (46) trägt, und wobei die Stange (47) von einem Druckmittelkanal (52) durchzogen ist, der einerseits mit dem Arbeitsraum (8) und andererseits mit einer an der stirnseitigen Gehäusewand (48) vorgesehenen Anschlußöffnung (53) kommuniziert.

14. Vorschubeinheit nach Anspruch 13, dadurch gekennzeichnet, daß der weitere Raum ebenfalls ein mit Arbeitsfluid beaufschlagbarer weiterer Arbeitsraum (9) ist, in den ein an der stirnseitigen Gehäusewand (48) festgelegtes, die Stange (47) mit radialem Spiel koaxial umschließendes Rohr (54) hineinragt, das einerseits zu dem weiteren Arbeitsraum (9) hin offen ist und andererseits mit einer an der Gehäusewand (48) vorgesehenen zweiten Anschlußöffnung (56) kommuniziert.

15. Vorschubeinheit nach einem der Ansprüche 1 bis 14, dadurch gekennzeichnet, daß das Gehäuse außen einen rechteckigen und dabei insbesondere quadratischen Querschnitt aufweist, wobei eine Seitenfläche (14) des prismatischen Körpers (13) parallel zu einer der vier Außenflächen (17) des Gehäuses verläuft.

16. Vorschubeinheit nach Anspruch 15, dadurch gekennzeichnet, daß an der zu einer Seitenfläche (14) des prismatischen Körpers (13) parallelen Außenfläche (17) des Gehäuses (1) mindestens eine Längsführung (58) zur Befestigung mindestens eines Sensors (63) vorgesehen ist, der auf eine im Bereich der vorgenannten Seitenfläche (14) an dem prismatischen Körper (13) festgelegte Magnetanordnung (62) ansprechen kann.

17. Vorschubeinheit nach Anspruch 16, dadurch gekennzeichnet, daß zwei Längsführungen (58) parallel nebeneinanderliegend vorgesehen sind, denen jeweils ein eigenes Magnetteil (64) der Magnetanordnung (62) zugeordnet sein kann.

## Claims

1. Fluidically-actuable feed unit with a housing (1) and with a feed element (5), mounted with axial movement facility in the housing (1), which can be extended by the admission of an actuating fluid out of the housing (1) into a working space (8) bounded by the feed element (5), wherein the feed element (5) is, at least along that section (12) of its length guided in the housing (1), in the form of a three-sided prismatic body (13), characterized in that the three-sided prismatic body (13) is guided in the housing (1) in the area of its three side faces (14, 15, 16), while the three transition zones (24) between each pair of adjacent side faces (14, 15; 15, 16; 16, 14) are unguided.

2. Feed unit according to claim 1, characterized in that the prismatic body (13) is designed as a regular prismatic body.

3. Feed unit according to claim 1 or 2, characterized in that the three transition zones (24) are arranged within the housing (1) with clearance from the opposite housing face (23).

4. Feed unit according to any of claims 1 to 3, characterized in that the prismatic body (13) is rounded at the transition zones (24), with the curved sections being unguided.

5. Feed unit according to any of claims 1 to 4, characterized in that there are provided on the housing (1) three first guide elements (21, 21') distributed over the prismatic face (22) of the prismatic body (13), each lying opposite one of the three side faces (14, 15, 16) of the prismatic body (13) and making contact with this side face for guidance.

6. Feed unit according to claim 5, characterized in that the first guide elements (21, 21') are located within the housing space (2) of the housing (1) which accommodates the guided length section (12) of the feed element (5), in the area of the opening (4) which allows passage of the feed element (5).

7. Feed unit according to any of claims 1 to 6, characterized in that there are provided on the prismatic body (13) three second guide elements (21, 21") distributed over and axially movable with its prismatic face (22), each lying opposite a housing-side guide surface (27) and making contact with this guide surface for guidance.

8. Feed unit according to claim 7, characterized in that the second guide elements (21, 21") are located at the end section (28) of the feed element (5) which is always within the housing (1).

9. Feed unit according to any of claims 5 to 8, characterized in that one guide element (32, 32') of the available first and/or second guide elements (21, 21', 21") is assigned one or more means of pressurization (33), which presses the guide element (32, 32') concerned with compressive force, in particular adjustable, against the opposite side face (14, 15, 16) or guide surface (27).

10. Feed unit according to claim 9, characterized in that the means of pressurization (33) is a spring assembly (34).

11. Feed unit according to claim 9 or 10, characterized in that the means of pressurization (33) is formed by a fluidic pressure medium, preferably with variably-adjustable pressure, for example via a pressure regulating valve.

12. Feed unit according to any of claims 5 to 11, characterized in that the guide elements (21, 21', 21") are plate-shaped.

13. Feed unit according to any of claims 1 to 12, characterized in that the guided length section (12) of the feed element (5) is mounted in an end housing space (2) with an opening (4) allowing passage of the feed element (5), wherein there is fixed to the end housing wall (48) axially opposite the opening (4) a bar (47) extending into the housing space (2), which at the same time extends into an inner space (45) in the feed element (5) where it supports a piston (46) dividing the inner space (45) into the working space (8) and a further space (9), and wherein a pressure medium duct (52) passes through the bar (47) and communicates at one end with the working space (8) and at the other end with a connection port (53) provided on the end housing wall (48).

14. Feed unit according to claim 13, characterized in that the further space is also a further working space (9), which can be supplied with operating fluid and into which extends a pipe (54) fixed to the end housing wall (48) and coaxially encompassing the bar (47) with radial play, said pipe being open at one end towards the further working space (9) and communicating at the other end with a second connection port (56) provided on the housing wall (48).

15. Feed unit according to any of claims 1 to 14, characterized in that the housing has externally a rectangular and in particular square cross-section, wherein one side face (14) of the prismatic body (13) runs parallel to one of the four outer faces (17) of the housing.

16. Feed unit according to claim 15, characterized in that at least one longitudinal guide (58) is provided on the outer face (17) of the housing (1) parallel to one side face (14) of the prismatic body (13), for the attachment of one or more sensors (63) which can respond to a magnet assembly (62) mounted on the prismatic body (13) in the area of the aforementioned side face (14).

17. Feed unit according to claim 16, characterized in that two parallel longitudinal guides (58) are provided adjacent to one another, to each of which an independent magnet element (64) of the magnet assembly (62) can be assigned.

## Revendications

1. Unité d'avance actionnable au moyen d'un fluide, comportant un boîtier (1) et un élément d'avance (5) monté axialement coulissant dans le boîtier (1), qui, par amenée d'un fluide d'actionnement dans une chambre de travail (8), limitée par l'élément d'avance (5), peut être sorti du boîtier (1), l'élément d'avance (5) étant conformé en corps prismatique (13) à trois faces, au moins le long de sa portion longitudinale (12) guidée dans le boîtier (1), caractérisée en ce que le corps prismatique (13) est guidé dans le boîtier (1), dans la région de ses trois faces latérales (14, 15, 16), tandis que les trois zones de transition (24) entre deux faces latérales (14, 15; 15, 16; 16, 14) voisines ne sont pas guidées.

2. Unité d'avance selon la revendication 1, caractérisée en ce que le corps prismatique (13) est conformé en corps prismatique régulier.

3. Unité d'avance selon la revendication 1 ou 2, caractérisée en ce que les trois zones de transition (24) sont disposées à l'intérieur du boîtier (1) à distance de la face de boîtier (23) tournée vers elles.

4. Unité d'avance selon l'une des revendications 1 3, caractérisée en ce que le corps prismatique (13) est arrondi sur les zones de transition (24), les portions présentant une courbure n'étant pas guidées.

5. Unité d'avance selon l'une des revendications 1 à 4, caractérisée en ce que sur le boîtier (1) sont prévus trois premiers éléments de guidage (21, 21') disposés répartis sur la surface prismatique (22) du corps prismatique (13), lesquels éléments de guidage font face chacun à l'une des trois faces latérales (14, 15, 16) du corps prismatique (13) et s'appliquent contre cette face latérale pour le guidage.

6. Unité d'avance selon la revendication 5, caractérisée en ce que les premiers éléments de guidage (21, 21') sont disposés à l'intérieur de la chambre de boîtier (2) du boîtier (1), logeant la portion longitudinale (12) guidée de l'élément d'avance (5), dans la zone de l'ouverture (4) permettant la traversée de l'élément d'avance (5).

7. Unité d'avance selon l'une des revendications 1 à 6, caractérisée en ce que sur le corps prismatique (13) sont prévus trois deuxièmes éléments de guidage (21,21'') montés déplaçables axialement avec ce corps, répartis sur sa surface prismatique (22), qui font face chacun à une surface de guidage (27) côté boîtier et qui s'appliquent contre cette surface de guidage pour le guidage.

8. Unité d'avance selon la revendication 7, caractérisée en ce que les deuxièmes éléments de guidage (21, 21") sont disposés sur la zone d'extrémité (28) de l'élément d'avance (5), se trouvant en permanence à l'intérieur du boîtier (1).

9. Unité d'avance selon l'une des revendications 5 à 8, caractérisée en ce qu'à un élément de guidage (32, 32') des premiers et/ou deuxièmes éléments de guidage (21, 21', 21") existants, est associé au moins un moyen d'actionnement (33), qui presse l'élément de guidage (32, 32') concerné avec une force de pression en particulier réglable, contre la face latérale (14, 15, 16) tournée vers lui ou contre la surface de guidage (27).

10. Unité d'avance selon la revendication 9, caractérisée en ce que le moyen d'actionnement (33) comprend un dispositif à ressort (34).

11. Unité d'avance selon la revendication 9 ou 10, caractérisée en ce que le moyen d'actionnement (33) est constitué par un fluide sous pression, dont la pression est de préférence réglable de manière variable, par exemple par l'intermédiaire d'une soupape de régulation de pression.

12. Dispositif d'avance selon l'une des revendications 5 à 11, caractérisé en ce que les éléments de guidage (21, 21', 21") sont en forme de plaques.

13. Dispositif d'avance selon l'une des revendications 1 à 12, caractérisé en ce que la portion longitudinale (12) guidée de l'élément d'avance (5) est disposée dans une chambre de boîtier (2) présentant une ouverture (4), permettant frontalement la traversée de l'élément d'avance (5), tandis que sur la paroi de boîtier frontale (48), opposée axialement à l'ouverture (4), est fixée une tige (47) pénétrant dans la chambre de boîtier (2), qui pénètre en même temps dans un volume intérieur (45) situé dans l'élément d'avance (5), et porte à cet endroit un piston (46) partageant le volume intérieur (45) en la chambre de travail (8) et en une autre chambre (9), la tige (47) étant traversée par un canal de fluide sous pression (52), qui communique d'une part avec la chambre de travail (8) et d'autre part avec une ouverture de raccordement (53) prévue sur la paroi de boîtier frontale (48).

14. Unité d'avance selon la revendication 13, caractérisée en ce que l'autre chambre est également une autre chambre de travail (9), pouvant recevoir le fluide d'actionnement, dans laquelle pénètre un tube (54) fixé sur la paroi de boîtier frontale (48), entourant coaxialement la tige (47) avec un jeu radial, qui est ouvert d'une part vers l'autre chambre de travail (9) et qui d'autre part communique avec une deuxième ouverture de raccordement (56) prévue sur la paroi de boîtier (48).

15. Unité d'avance selon l'une des revendications 1 à 14, caractérisée en ce que le boîtier présente extérieurement une section rectangulaire et dans ce cas en particulier carrée, une face latérale (14) du corps prismatique (13) s'étendant parallèlement à l'une des quatre faces extérieures (17) du boîtier.

16. Unité d'avance selon la revendication 15, caractérisée en ce que sur la face extérieure (17) du boîtier (1), parallèle à une face latérale (14) du corps prismatique (13), est prévu au moins un guidage longitudinal (58) pour la fixation d'au moins un capteur (63), qui peut réagir à un dispositif magnétique (62) fixé dans la zone de la face latérale (14) précitée, sur le corps prismatique (13).

17. Unité d'avance selon la revendication 16, caractérisée en ce que deux guidages longitudinaux (58) sont prévus, juxtaposés et parallèles, à chacun desquels pouvant être associé sont propre élément magnétique (64) du dispositif magnétique (62).
